# FASCICULE DE BREVET EUROPEEN

(11) **EP 0 792 704 B1**
(45) Date de publication et mention de la délivrance du brevet: **12.09.2001**
(21) Numéro de dépôt: 97400198.4
(22) Date de dépôt: 28.01.1997
(51) Int. Cl.: B21D 35/00, B60S 1/38

(54) **Procédé pour la réalisation de balais d'essuie-glaces**
Verfahren zum Herstellen von Wischblättern
Method of making wiper blades

(30) Priorité: 01.03.1996 FR 9602606
(43) Date de publication de la demande: 03.09.1997
(73) Titulaire: Société Noiséenne Outillage de Presse S.N.O.P. SA, 93130 Noisy Le Sec (FR)
(72) Inventeur: Combes, Patrice, 43100 Brioude, (Haute Loire) (FR)
(74) Mandataire: Cabinet HERRBURGER

(56) Documents cités:
- DE-A- 3 926 714
- FR-A- 2 563 482
- GB-A- 2 093 906
- US-A- 4 309 790
- US-A- 4 793 020

## Description

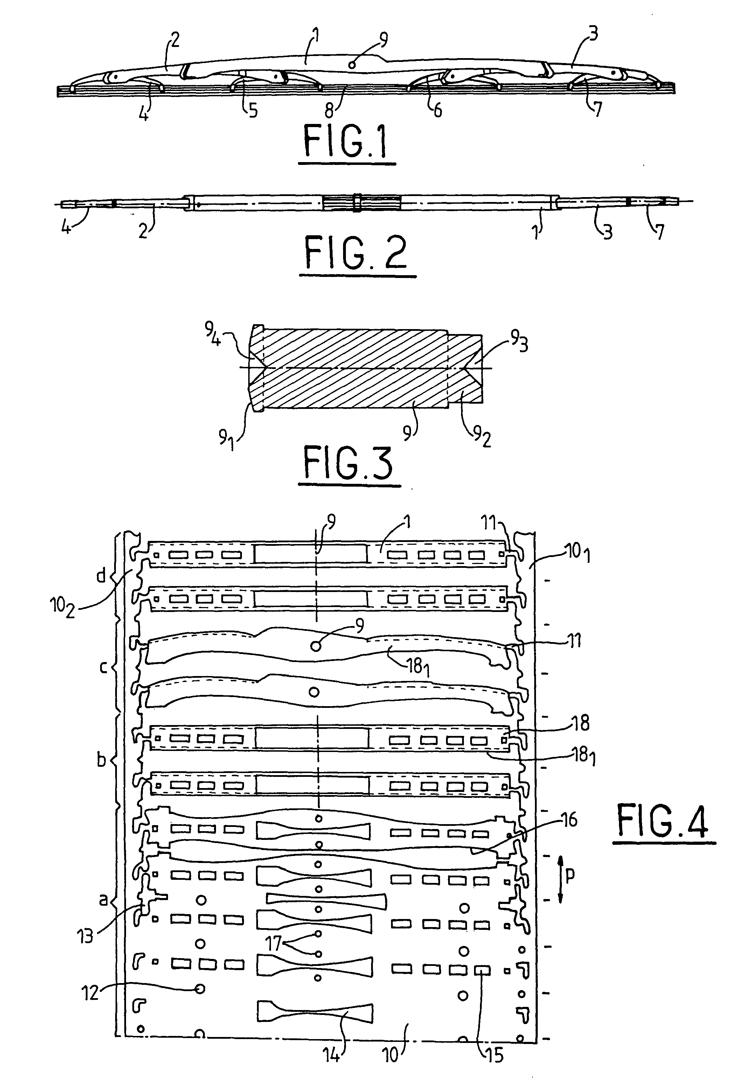

Les balais d'essuie-glaces comportent (voir figure 1) une monture 1 recevant de manière pivotante, par ses extrémités, deux palonniers intermédiaires 2 et 3. Suivant l'exemple représenté, ces palonniers intermédiaires supportent eux-mêmes à pivotement des palonniers 4, 5, 6 et 7 sur lesquels est accroché le balai d'essuie-glace proprement dit 8.

La monture 1 et en général également les palonniers, sont obtenus par façonnage, découpage, pliage, cambrage, etc. d'une bande de métal à l'aide d'un outil à suivre.

Lorsque la monture 1 est réalisée, il s'agit alors d'assurer le montage de l'axe 9 qui servira à l'accrochage de la monture et donc du balai d'essuie-glace sur son bras de manoeuvre.

Cependant, ce mode de fabrication entraîne une manipulation individuelle des montures les unes après les autres, pour assurer la mise en place et le sertissage de l'axe, ce qui se traduit par une augmentation des coûts de fabrication.

Egalement, après le montage de l'axe d'accrochage 9 sur la monture 1, cette dernière doit subir une opération de peinture. Or, étant donné que les axes sont fixés sur des montures séparées les unes des autres, l'opération de peinture ultérieure entraîne obligatoirement leur manipulation individuelle, ce qui contribue également à augmenter les coûts de fabrication.

La présente invention a notamment pour but de remédier à ces inconvénients et concerne à cet effet un procédé pour la fabrication de balais d'essuie-glaces comportant une monture supportant le balai d'essuie-glace proprement dit par l'intermédiaire de palonniers, cette monture étant également pourvue d'un axe pour son accrochage à un bras de manoeuvre, procédé caractérisé en ce qu'on réalise la monture par des opérations successives de poinçonnage, découpage, pliage, cambrage d'une bande de métal à l'aide d'un outil à suivre, procédé au cours duquel on forme à plat sur la bande une succession d'ébauches de monture parallèles, ces ébauches étant reliées entre elles aux bords de la bande par des ponts de métal, on cambre l'ébauche pour lui donner en coupe la forme générale d'un U dont les bords sont perpendiculaires à la bande de métal, on fait pivoter de 90° les ébauches cambrées à hauteur des ponts pour placer les bords de l'ébauche parallèlement à la bande de métal, on place un axe d'accrochage sur chaque ébauche de monture alors qu'elle se trouve dans cette position, on fait pivoter à nouveau la monture pour replacer les bords de l'ébauche perpendiculairement à la bande de métal et on réalise le sertissage final de l'axe.

Il est à noter que l'on connaît par le document US-A-4 793 020 un procédé du même type se distinguant en particulier du procédé susmentionné par l'étape comprenant la mise en place et le sertissage de l'axe d'accrochage alors que toutes les ébauches de monture sont encore reliées aux bords de la bande de métal.

Or, cette étape constitue la caractéristique essentielle du procédé conforme à l'invention vu qu'elle permet d'éviter une manipulation individuelle de montures pour le montage de l'axe et ainsi d'économiser du temps.

Selon une autre caractéristique de l'invention, les bandes de montures pourvues de leurs axes d'accrochage, sont soumises à une opération de peinture.

L'invention est représentée à titre d'exemple non limitatif sur les dessins ci-joints dans lesquels :
- la figure 1 est une vue latérale d'un essuie-glace,
- la figure 2 est une vue de dessus de la figure 1,
- la figure 3 est une vue en coupe axiale de l'axe d'accrochage de la monture de l'essuie-glace,
- la figure 4 illustre de manière schématique le procédé de l'invention dans ses diverses étapes de travail d'une bande de métal sur un outil à suivre.

La présente invention a en conséquence pour but la réalisation en continu et à moindre coût d'un balai d'essuie-glace et plus particulièrement de la monture de cet essuie-glace.

L'invention permet ainsi d'obtenir des montures de balai d'essuie-glace entièrement terminées, c'est-à-dire pourvues de leur axe d'accrochage et entièrement peintes, ces montures étant reliées les unes aux autres sur les bords de la bande de métal mise en oeuvre, par l'intermédiaire de ponts métalliques de liaison.

Suivant la figure 4, la bande métallique 10 se déplace dans une succession d'outils formant ensemble un outil dit « outil à suivre » à l'intérieur duquel la bande de métal 10 est avancée successivement d'un pas identique « p ». Au cours de ces divers pas d'avancement « p », la bande 10 subit diverses opérations de découpage, poinçonnage, perçage, pliage, cambrage, calibrage et autres, afin d'obtenir la monture terminée 1 qui est pourvue de son axe d'accrochage 9. Ces diverses montures 1 sont encore maintenues parallèlement les unes aux autres, sur les bords 10₁ et 10₂ de la bande, par des ponts 11 de métal, ces ponts subsistant entre l'extrémité des montures 1 et ses bords 10₁, 10₂.

Les bordures 10₁, 10₂ peuvent alors être sectionnées, par exemple toutes les vingt montures, de manière que les groupes de montures ainsi obtenus puissent être aisément manipulés par exemple pour être accrochés à l'état suspendu dans une installation de peinture par projection ou au trempé.

Selon le procédé illustré, on effectue ainsi tout d'abord en « a » un certain nombre de pas d'avancement « p » au cours desquels on réalise en 12 les perçages pour les axes pilotes d'entraînement de la bande, en 13 des poinçonnages assurant la formation des ponts 11, en 14 le découpage du sommet des montures, en 15 les perçages latéraux du sommet de la monture, en 16 le détourage des montures ainsi maintenues parallèlement par les ponts 11. Enfin, on réalise en 17 les perçages destinés à recevoir l'axe 9 d'accrochage de la monture.

Ces diverses opérations de l'étape « a » du procédé sont réalisées alors que la bande est maintenue à plat.

A l'étape « b », on effectue également, au cours de divers pas d'avancement « p », le cambrage de chaque ébauche de monture qui se présente ainsi en 18 sous la forme d'une structure en U dont les deux bords latéraux 18₁ sont rabattus et sont orientés perpendiculairement au plan de la bande 10.

A l'étape « c », la monture est pivotée de 90° à hauteur des ponts de jonction 11 de façon que les rebords 17₁ se présentent horizontalement en permettant ainsi l'injection de l'axe 9 dans les trous en regard 17 réalisés précédemment.

Dans cette position, l'axe 9 subit une opération de présertissage afin d'assurer son maintien en place dans les trous 17 puis, à l'étape « d », la monture est à nouveau pivotée en sens contraire de 90° de manière que les bords 17₁ soient à nouveau situés perpendiculairement au plan de la bande alors que l'axe 9 est situé lui, au contraire, parallèlement au plan de la bande.

Dans cette position, un outil de sertissage peut alors aisément être amené de part et d'autre de chaque monture 1 afin d'assurer le sertissage final de l'axe 9 à ses deux extrémités.

Finalement, les bandes de monture ainsi constituées subissent une opération de précisaillage de chacune des pièces à hauteur des ponts 11 ainsi qu'une opération de cisaillage des bordures 10₁ pour former des tronçons de bande comportant chacune un nombre déterminé de montures.

Du fait de ces dispositions, la manipulation des montures pour leur stockage, leur conditionnement, leur transport et leur peinture, est considérablement facilitée.

Pour la mise en oeuvre du procédé conforme à l'invention, l'axe 9 sera de préférence un axe pourvu d'un épaulement d'extrémité 9₁ afin de constituer une tête assurant sa retenue sur le bord de l'un des perçages 17 de la monture.

Par contre, l'autre extrémité 9₂ de cet axe présente une portée de diamètre rétréci venant se loger dans un perçage correspondant de la monture. Cette extrémité de diamètre rétréci 9₂ est pourvue à son extrémité d'un évidement central conique 9₃ destiné à faciliter le sertissage de l'extrémité de l'axe sur la monture.

Pour des raisons esthétiques, un logement de forme correspondante 94 est également prévu dans l'axe de la tête 91.

## Revendications

1. Procédé pour la fabrication de balais d'essuie-glaces comportant une monture (1) supportant le balai d'essuie-glace proprement dit (8) par l'intermédiaire de palonniers (2, 3, 4, 5, 6, 7), cette monture étant également pourvue d'un axe (9) pour son accrochage à un bras de manoeuvre,
**caractérisé en ce qu'**
on réalise la monture par des opérations successives de poinçonnage, découpage, pliage, cambrage d'une bande de métal à l'aide d'un outil à suivre, procédé au cours duquel on forme à plat sur la bande une succession d'ébauches de monture parallèles, ces ébauches étant reliées entre elles aux bords (10₁, 10₂) de la bande par des ponts de métal (11), on cambre l'ébauche pour lui donner en coupe la forme générale d'un U dont les bords (18₁) sont perpendiculaires à la bande de métal, on fait pivoter de 90° les ébauches cambrées à hauteur des ponts (11) pour placer les bords de l'ébauche (18) parallèlement à la bande de métal, on place un axe d'accrochage (9) sur chaque ébauche de monture alors qu'elle se trouve dans cette position, on fait pivoter à nouveau la monture pour replacer les bords de l'ébauche perpendiculairement à la bande de métal et on réalise le sertissage final de l'axe.

2. Procédé conforme à la revendication 1,
**caractérisé en ce que**
les bandes de montures pourvues de leurs axes d'accrochage, sont soumises à une opération de peinture.

## Patentansprüche

1. Verfahren zur Herstellung von Scheibenwischern, bestehend aus einem Halter (1), der den eigentlichen Scheibenwischer (8) mit Hilfe von Zangenhebeln (2, 3, 4, 5, 6, 7) trägt, wobei dieser Halter ebenfalls mit einer Achse (9) zu seiner Befestigung an einem Betätigungshebel versehen ist,
**dadurch gekennzeichnet, dass**
der Halter durch aufeinanderfolgende Präge-, Ausstanz-, Falt-, Biegevorgänge eines Metallstreifens mit Hilfe eines Folgewerkzeugs hergestellt wird, Verfahren, in dem flach aus dem Streifen eine Folge von parallelen Halterrohlingen geformt wird, die mit den Rändern (10₁, 10₂) des Streifens durch Metallbrücken (11) verbunden sind, dann wird der Rohling gebogen, um ihm im Schnitt die allgemeine Form eines U zu verleihen, dessen Ränder (18₁) senkrecht zum Metallstreifen stehen, dann werden die gebogenen Rohlinge in Höhe der Brücken (11) um 90° gekippt, um die Ränder des Rohlings (18) parallel zum Metallstreifen auszurichten, dann wird eine Befestigungsachse (9) in jeden Halterrohling eingesetzt, während dieser sich in dieser Stellung befindet, dann wird der Halter erneut gekippt, um die Ränder des Rohlings wieder senkrecht zum Metallstreifen zu stellen, und es erfolgt die endgültige Befestigung der Achse durch Umlegen.

2. Verfahren nach Patentanspruch 1,
**dadurch gekennzeichnet, dass**
die mit ihren Befestigungsachsen versehenen Halterstreifen einem Lackiervorgang unterworfen werden.

## Claims

1. Method of manufacturing windscreen wiper blades comprising a frame (1) supporting the windscreen wiper blade proper (8) by way of rocking levers (2, 3, 4, 5, 6, 7), the frame also being provided with a pin (9) for coupling to an operating arm, **characterised in that** the frame is produced by successive operations of stamping, cutting, bending and cambering a strip of metal using a gang die, in which method a succession of parallel frame blanks are formed flat on the strip, the blanks being connected to one another at the edges (10₁, 10₂) of the strip by metal bridges (11), the blank is cambered to give it, in section, the general shape of a U, the edges (18₁) of which are perpendicular to the metal strip, the cambered blanks are pivoted through 90° at the level of the bridges (11) in order to place the edges of the blank (18) parallel with the metal strip, a coupling pin (9) is placed on each frame blank when it is in that position, the frame is pivoted again in order to return the edges of the blank to the position perpendicular to the metal strip, and the final fastening of the pin is carried out.

2. Method according to claim 1, **characterised in that** the strips of frames provided with their coupling pins are subjected to a painting operation.
